# EUROPEAN PATENT APPLICATION

(11) **EP 4 826 934 A1**
(43) Date of publication of application: **21.10.2026**
(21) Application number: 26305069.2
(22) Date of filing: 15.01.2026
(51) Int. Cl.: H02H 3/07, H02H 3/20, H02H 3/22, H02H 1/06, H02H 3/04, H02H 3/14, H02H 3/33

(54) **SOLID-STATE CIRCUIT BREAKER**

(30) Priority: 18.04.2025 CN 202510495058
(71) Applicant: SCHNEIDER ELECTRIC INDUSTRIES SAS, 92500 Rueil-Malmaison (FR)
(72) Inventor: JIA, Yongpeng, Shanghai 201203 (CN); WANG, Wei, Shanghai 201203 (CN); LI, Hui, Shanghai 201203 (CN)
(74) Representative: Plasseraud IP

(57) **Abstract**

A solid-state circuit breaker comprising: a mechanical switch module (13) and an electronic power switch module (141) connected in series between an input end (11) and a load, for closing and opening the connection between the input end and the load; an input voltage measurement module (18) for measuring an input voltage at the input end; and a controller (19) communicatively connected to the mechanical switch module, the electronic power switch module, and the input voltage measurement module. The controller is configured to: obtain an instantaneous value of the input voltage from the input voltage measurement module and to control the opening and closing of the electronic power switch module based on the instantaneous value to perform transient voltage protection; and to control the opening and closing of the electronic power switch module and the mechanical switch module based on a RMS value of the input voltage, to perform steady-state voltage protection, and the RMS value is obtained based on the instantaneous value.

Fig. 1

## Description

### TECHNICAL FIELD

The present disclosure relates to a solid-state circuit breaker.

### BACKGROUND

Solid-state circuit breakers achieve improvement in operating speed and accuracy of circuit breakers through contactless switches. However, existing solid-state circuit breakers still require improvements in intelligence, to enable detection of input voltage at the power grid input end, meet arc-free requirements, and enable users to learn the fault causes of the circuit breaker or the like in real-time.

### SUMMARY

At least some embodiments of the present disclosure provide a solid-state circuit breaker comprising: a mechanical switch module, connected in series between an input end and a load, for closing and opening a connection between the input end and the load; an electronic power switch module connected in series between the input end and the load, for closing and opening the connection between the input end and the load, and connected in series with the mechanical switch module; an input voltage measurement module, for measuring an input voltage at the input end; and a controller communicatively connected to the mechanical switch module, the electronic power switch module, and the input voltage measurement module. The controller is configured to: obtain an instantaneous value of the input voltage from the input voltage measurement module, and control the opening and closing of the electronic power switch module based on the instantaneous value to perform transient voltage protection; and to control the opening and closing of the electronic power switch module and the mechanical switch module based on a RMS value of the input voltage to perform steady-state voltage protection, wherein the RMS value is obtained based on the instantaneous value.

In some embodiments, for example, controlling the opening and closing of the electronic power switch module based on the instantaneous value to perform instantaneous voltage protection comprises: comparing the instantaneous value with an instantaneous threshold, when the instantaneous value is greater than the threshold, controlling the electronic power switch module to perform an open-then-close action; counting, within a fixed window, a number of times the electronic power switch module performs the open-then-close action; comparing the counted count value with an accumulated threshold; when the counted count value count is greater than the accumulated threshold, controlling the electronic power switch module to remain open for a first predetermined open time and then causing electronic power switch module to close, wherein the first predetermined open time is longer than an open duration of the electronic power switch module during the open-then-close action of the electronic power switch module; and when the count is less than the accumulated threshold, maintaining the electronic power switch module closed.

In some embodiments, for example, the transient voltage protection further comprises: calculating an average value of the instantaneous value within a sliding window; comparing the average value with an average value threshold; when the average value is greater than the average value threshold, controlling the electronic power switch module to open and remain open for a second predetermined open time and then to close, wherein the second predetermined open time is longer than an opening duration of the electronic power switch module during the open-then-close action of the electronic power switch module; and when the average value is less than the average value threshold, maintaining the electronic power switch module closed.

In some embodiments, for example, the mechanical switch module remains closed while the electronic power switch module performs the open-then-close action.

In some embodiments, for example, the instantaneous value of the input voltage is a value of the input voltage at a predetermined phase.

In some embodiments, for example, controlling the opening and closing of the electronic power switch module and the mechanical switch module based on the RMS value to perform steady-state voltage protection comprises: comparing the RMS value with a minimum voltage threshold; when the RMS value has remained below the minimum voltage threshold for a first predetermined time threshold, determining that the input voltage is in an undervoltage state, and controlling the electronic power switch module and the mechanical switch module such that the electronic power switch module opens first, followed by the mechanical switch module opening; and comparing the RMS value with a maximum voltage threshold, when the RMS value has remained above the maximum voltage threshold for a second predetermined time threshold, determining that the input voltage is in an overvoltage condition, and controlling the electronic power switch module and the mechanical switch module such that the electronic power switch module opens first, followed by the mechanical switch module opening.

In some embodiments, for example, the solid-state circuit breaker further comprises a wireless communication module, communicatively connected to the controller, for performing wireless communication. The controller is further configured to: when the mechanical switch module is opened, control the wireless communication module to send a first control message indicating that the solid-state circuit breaker is opened due to undervoltage protection, or a second control message indicating that the solid-state circuit breaker is opened due to overvoltage protection.

In some embodiments, for example, the solid-state circuit breaker further comprises a ground monitoring module connected between a housing of the load and ground for measuring the voltage between the housing and the ground. The controller is configured to determine whether a ground fault exists in the load based on the voltage.

In some embodiments, for example, the solid-state circuit breaker further comprises an auxiliary power supply module connected to the input end and configured to convert the input voltage at the input end into a direct current voltage having a predetermined value to supply power to the controller and the input voltage measurement module.

In some embodiments, the mechanical switch module is located closer to the input end than the electronic power switch module. The input voltage measurement module is disposed between the input end and the mechanical switch module. The solid-state circuit breaker further comprises a first output voltage measuring module disposed between the mechanical switch module and the electronic power switch module, and a second output voltage measuring module disposed between the electronic power switch module and the load.

In some embodiments, the controller is configured to: obtain a first output voltage from the first output voltage measuring module and a second output voltage from the second output voltage measuring module, and to determine whether the electronic power switch module is open based on the first output voltage and the second output voltage.

In some embodiments, the controller is configured to determine whether the electronic power switch module is open based on the first output voltage and the second output voltage, and to control the mechanical switch module to open only when the electronic power switch module is determined to be open.

### BRIEF DESCRIPTION OF DRAWINGS

FIG. 1 illustrates a schematic block diagram of the solid-state circuit breaker according to an embodiment of the present disclosure.
FIG. 2 illustrates a flowchart of a transient voltage protection method of the solid-state circuit breaker according to an embodiment of the present disclosure.
FIG. 3 illustrates a flowchart of a steady-state voltage protection method of the solid-state circuit breaker according to an embodiment of the present disclosure.

### DETIALED DESCRIPTION

Hereinafter, the solid-state circuit breaker according to embodiments of the present disclosure will be described in detail with reference to the drawings.

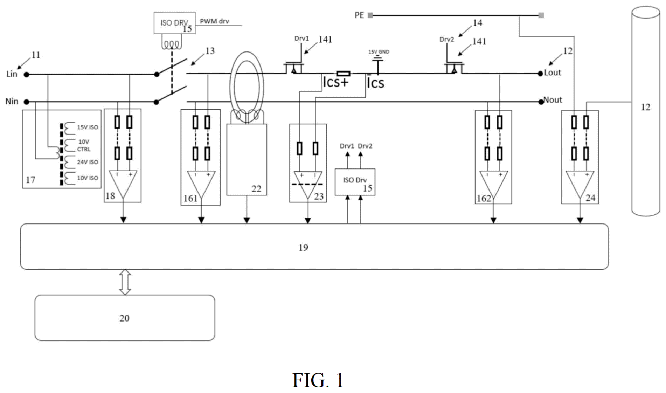

FIG. 1 illustrates a schematic block diagram of a solid-state circuit breaker according to an embodiment of the present disclosure. As shown in FIG. 1, the solid-state circuit breaker is connected between an input end 11, such as a power grid, and a load 12, such as a street light pole, to close or open the connection between the input end 11 and the load 12. The solid-state circuit breaker comprises an electronic power switch module 14 and a mechanical switch module 13, which are connected in series between the input end 11 and the load 12, and the electronic power switch module 14 and the mechanical switch module 13 are connected in series with each other. Due to the provision of the electronic power switch module 14, the solid-state circuit breaker is capable of achieving rapid closing and opening of the connection between the input end 11 and the load 12. Furthermore, due to the provision of the mechanical switch module 13, the solid-state circuit breaker is capable of meeting the relevant regulations and requirements, and can ensure reliable opening of the connection.

Furthermore, the solid-state circuit breaker also comprises a controller 19, an auxiliary power supply module 17, an input voltage measurement module 18, a first output voltage measuring module 161, a second output voltage measuring module 162, a ground monitoring module 24, a leakage current detection module 22, and a current measuring module 23. The controller 19 is connected to the mechanical switch module 13, the electronic power switch module 14, the input voltage measurement module 18, the first output voltage measuring module 161, the second output voltage measuring module 162, the ground monitoring module 24, the leakage current detection module 22, and the current measuring module 23, so as to receive a measurement value from the respective module and/or to control the operation of the respective module. The controller 19 may be a microcontroller unit (MCU). The auxiliary power supply module 17 is connected to the input end 11 and configured to convert the voltage from the input end 11 into a DC voltage having a predetermined voltage value, so as to supply power to one or more of the following modules: the controller 19, the input voltage measurement module 18, the first output voltage measuring module 161, the second output voltage measuring module 162, the ground monitoring module 24, the leakage current detection module 22, and the current measuring module 23. The auxiliary power supply module 17 comprises, for example, an EMC circuit, a rectifier bridge, and a DC-DC converter.

The input voltage measurement module 18 is used for measuring the input voltage at the input end 11. The input voltage measurement module 18 is located closer to the input end 11 than the mechanical switch module 13 and the electronic power switch module 14. In the present embodiment, the mechanical switch module 13 is located closer to the input end 11 than the electronic power switch module 14, and the input voltage measurement module 18 is disposed between the input end 11 and the mechanical switch module 13. The input voltage measurement module 18 can monitor the voltage at the input end 11 in real time for detecting abnormal conditions, such as overvoltage condition or undervoltage condition, etc., at the input end 11. The controller 19 may control the closing and opening of the mechanical switch module 13 and/or the electronic power switch module 14 based on the input voltage measured by the input voltage measurement module 18, to prevent damage to the load 12 caused by abnormal conditions of the input end 11. In this embodiment, the controller 19 is connected to the mechanical switch module 13 and the electronic power switch module 14 via a driver module 15 to control the closing and opening of the mechanical switch module 13 and/or the electronic power switch module 14.

Specifically, the controller 19 may be configured to implement a transient voltage protection method based on the measurement value of the input voltage measured by the input voltage measurement module 18. Furthermore, the controller 19 may also be configured to implement a steady-state voltage protection method based on the measurement value of the input voltage measured by the input voltage measurement module 18. In particular, the transient voltage protection method may include obtaining an instantaneous value of the input voltage from the input voltage measurement module 18 and controlling the opening and closing of the electronic power switch module 14 based on the instantaneous value, to perform instantaneous voltage protection. The steady-state voltage protection method may include controlling the opening and closing of the electronic power switch module 14 and the mechanical switch module 13 based on an RMS (Root-Mean-Square) value of the input voltage, to perform steady-state voltage protection. The RMS value is obtained based on the instantaneous value.

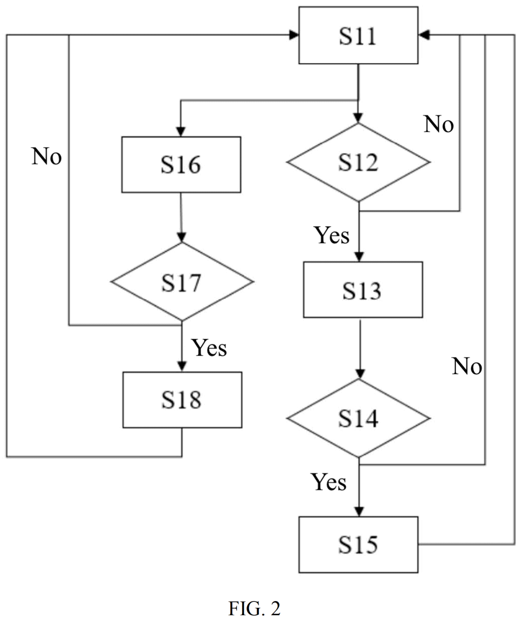

FIG. 2 illustrates a flowchart of a transient voltage protection method of the solid-state circuit breaker according to an embodiment of the present disclosure. As shown in FIG. 2, the transient voltage protection method comprises a fixed-window-based instantaneous voltage protection method, the method comprises:
Step S11: obtaining the instantaneous value of the input voltage from the input voltage measurement module 18. For example, the instantaneous value is a value of the input voltage at a predetermined phase.
Step S12: comparing the instantaneous value with an instantaneous threshold to determine whether the instantaneous value is greater than the instantaneous threshold. For example, the instantaneous threshold may be set based on the specific conditions of the power grid. When the instantaneous value is greater than the instantaneous threshold, the process proceeds to Step S13. When the instantaneous value is less than the threshold, the process returns to Step S11.
Step S13: when the instantaneous value is greater than the threshold, the electronic power switch module 14 is controlled to perform an open-then-close action, and the process proceeds to Step S14. While the open-then-close action of the electronic power switch module 14, the mechanical switch module 13 remains closed. For example, in Step S13, the open duration of the electronic power switch module 14 is very short, such as on the order of microseconds, for example, less than 10 microseconds. Thus, the open operation of the electronic power switch module 14 does not affect the use of the load 12. However, by the open operation of the electronic power switch module 14, the transient voltage protection for the electrical components within the solid-state circuit breaker and for the electrical components at the load end is achieved.
Step S14: counting, within a fixed window, the number of times the electronic power switch module 14 performs the open-then-close actions; and comparing the count value with an cumulative count threshold to determine whether the count value is greater than the cumulative count threshold. The duration of the fixed window is, for example, on the order of milliseconds, such as, greater than 0.1 milliseconds and less than 10 milliseconds. When the counted count value is greater than the cumulative count threshold, the process proceeds to Step S15. The cumulative count threshold may be, for example, 2 or 3 times. When the counted count value is less than the cumulative count threshold, the process returns to Step S11.
Step S15: when the counted count value exceeds the cumulative count threshold, controlling the electronic power switch module 14 to remain open for a first predetermined open time, and then controlling the electronic power switch module 14 to close, and returning to Step S11. The first predetermined open time is longer than the open duration of the electronic power switch module 14 during the open-then-close action of the electronic power switch module 14. Therefore, when abnormal conditions occur frequently in the input voltage, the solid-state circuit breaker can maintain the opening between the load 12 and the input end 11 through the electronic power switch module 14, thereby achieving transient voltage protection. The first predetermined open time may be configured so that the open action of the electronic power switch module 14 does not have any impact on the use of the load 12.

Furthermore, as shown in FIG. 2, the transient voltage protection method also comprises a sliding-window-based instantaneous voltage protection method , which comprises:
Step S11: obtaining the instantaneous value of the input voltage from the input voltage measurement module 18.
Step S16: calculating an average value of the instantaneous value within a sliding window, and proceeding to Step S17.
Step S17: comparing the average value with an average value threshold, and determining whether the average value is greater than the average value threshold. When the average value is greater than the average value threshold, the process proceeds to Step S18. When the average value is less than the average value threshold, the electronic power switch module 14 remains closed, and the process returns to Step S11.
Step S18: when the average value is greater than the average value threshold, causing the electronic power switch module 14 to remain open and remain open for a second predetermined open time, and then causing the electronic power switch module 14 to close, and returning to Step S11. The second predetermined open time is longer than the open duration of the electronic power switch module 14 during the open-then-close action of the electronic power switch module 14. The second predetermined open time may be the same as or different from the first predetermined open time.

By the transient voltage protection methods described above for the solid-state circuit breaker, transient voltage protection for the electrical components within the solid-state circuit breaker and the electrical components at the load end is achieved. Furthermore, the performance requirements of each electrical component are reduced, thereby lowering cost.

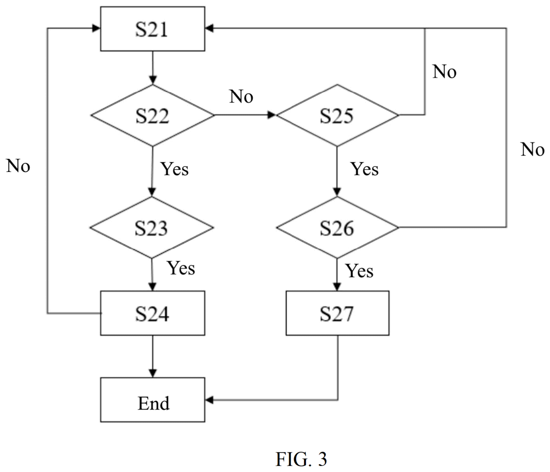

FIG. 3 illustrates a flowchart of a steady-state voltage protection method of the solid-state circuit breaker according to an embodiment of the present disclosure. As shown in FIG. 3, the steady-state voltage protection method comprises:
Step S21: obtaining the RMS value of the input voltage based on the instantaneous value of the input voltage.
Step S22: comparing the RMS value with a minimum voltage threshold and determining whether the RMS value is below a minimum voltage threshold. When the RMS value is below the minimum voltage threshold, proceeding to Step S23. When the RMS value is above the minimum voltage threshold, proceeding to Step S25.
Step S23: When the RMS value is below the minimum voltage threshold, determining whether the RMS value has remained below the minimum voltage threshold for a first predetermined time threshold. When it is determined that the RMS value has remained below the minimum voltage threshold for the first predetermined time threshold, proceeding to Step S24. When it is determined that the RMS value has remained below the minimum voltage threshold for a duration less than the first predetermined time threshold, returning to Step S21.
Step S24: when it is determined that the RMS value has remained below the minimum voltage threshold for the first predetermined time threshold, determining that the input voltage is in an undervoltage condition, and controlling the electronic power switch module 14 and the mechanical switch module 13 such that the electronic power switch module 14 opens first, followed by the mechanical switch module 13 opening. The method may then end.
Step S25: comparing the RMS value with the maximum voltage threshold and determining whether the RMS value is above the maximum voltage threshold. When the RMS value is above the maximum voltage threshold, proceeding to Step S26. When the RMS value is below the maximum voltage threshold, returning to Step S21.
Step S26: when the RMS value is above the maximum voltage threshold, determining whether the RMS value has remained above the maximum voltage threshold for a second predetermined time threshold. When it is determined that the RMS value has remained above the maximum voltage threshold for the second predetermined time threshold, proceeding to Step S27. When it is determined that the RMS value has remained above the maximum voltage threshold for a duration less than the second predetermined time threshold, returning to Step S21.
Step S27: when it is determined that the RMS value has remained above the maximum voltage threshold for the second predetermined time threshold, determining that the input voltage is in an overvoltage condition, and controlling the electronic power switch module 14 and the mechanical switch module 13 such that the electronic power switch module 14 opens first, followed by the mechanical switch module 13. The method may then end.

Furthermore, the solid-state circuit breaker may further comprises a wireless communication module 20, communicatively connected to the controller 19, for performing wireless communication. Specific fault reasons for the solid-state circuit breaker's opening or failure to start can be sent to the user in real time via this wireless communication module 20. For example, the controller 19 may be configured to, when the mechanical switch module 13 is opened, control the wireless communication module 20 to send a first control message or a second control message. The first control message indicates that the solid-state circuit breaker was opened due to undervoltage protection. The second control message indicates that the solid-state circuit breaker was opened due to overvoltage protection.

In the solid-state circuit breaker, the controller 19 controls the electronic power switch module 14 to open before the mechanical switch module 13 and to close after the mechanical switch module 13. That is, the mechanical switch module 13 always performs the open action only when the electronic power switch module 14 is in an open state. Therefore, the generation of electric arc is avoided .

For example, the controller 19 may control the electronic power switch module 14 to open prior to the mechanical switch module 13 based on time control. For example, a first open control signal is sent to the electronic power switch module 14, and a second open control signal is sent to the mechanical switch module 13 with a delay relative to the first open control signal. Furthermore, for example, the controller 19 may control the electronic power switch module 14 to open before the mechanical switch module 13 based on feedback control. After receiving a feedback signal indicating that the electronic power switch module 14 has been opened, the controller 19 sends the second open control signal to the mechanical switch module 13.

The first output voltage measuring module 161 is disposed between the mechanical switch module 13 and the electronic power switch module 14. The second output voltage measuring module 162 is disposed between the electronic power switch module 14 and the load 12. The controller 19 may be configured to determine whether the electronic power switch module 14 has been opened based on the first output voltage obtained from the first output voltage measuring module 161 and the second output voltage obtained from the second output voltage measuring module 162, and only control the mechanical switch module 13 to open when the electronic power switch module 14 is determined to have been opened. With feedback control, it is ensured that the electronic power switch module 14 opens prior to the mechanical switch module 13, avoiding the situation where the mechanical switch module 13 opens while the electronic power switch module 14 has not opened due to fault in the electronic power switch module 14 or other reasons.

The ground monitoring module 24 is connected between the housing of the load 12 and the ground PE to measure the voltage between the housing and the ground PE. The controller 19 is configured to determine whether a ground fault exists in the load 12 based on this voltage. The ground monitoring module 24 may monitor the insulation resistance between the housing of the downstream load 12 and the ground PE in real time based on this voltage, thereby helping the user determine whether a ground fault exists on the housing of the load 12. When the controller 19 determines that a ground fault exists in the load 12, it may control the wireless communication module 20 to send a third control message indicating that a ground fault exists in the load 12. When the controller 19 determines that a ground fault exists in the load 12, the controller 19 may control the electronic power switch module 14 and the mechanical switch module 13, such that the electronic power switch module 14 opens first, followed by the mechanical switch module 13 opening. When the controller 19 determines that a ground fault exists in the load 12, the controller 19 may also prohibit the electronic power switch module 14 and the mechanical switch module 13 from closing.

The leakage current detection module 22 is disposed between the mechanical switch module 13 and the electronic power switch module 14, and is configured to detect leakage current in the solid-state circuit breaker. The wireless communication module 20 may be used to notify the user of the occurrence of leakage.

The electronic power switch module 14 comprises two electronic power switches 141, 142 connected back-to-back. The current measuring module 23 is connected between the two electronic power switches 141, 142 and is used for detecting whether a fault exists in the electronic power switch module 14. The wireless communication module 20 can be used to notify the user of the occurrence of a fault in the electronic power switch module 14.

The scope of the present disclosure is not limited to the embodiments described above, but is defined by the appended claims and their equivalents.

## Claims

1. A solid-state circuit breaker, comprising:
a mechanical switch module, connected in series between an input end and a load, for closing and opening a connection between the input end and the load;
an electronic power switch module, connected in series between the input end and the load, for closing and opening the connection between the input end and the load, and connected in series with the mechanical switch module;
an input voltage measurement module, for measuring an input voltage at the input end; and
a controller communicatively connected to the mechanical switch module, the electronic power switch module, and the input voltage measurement module,
wherein the controller is configured to:
obtain an instantaneous value of the input voltage from the input voltage measurement module, and control an opening and closing of the electronic power switch module based on the instantaneous value to perform instantaneous voltage protection; and
control the opening and closing of the electronic power switch module and the mechanical switch module based on a RMS value of the input voltage to perform steady-state voltage protection, wherein the RMS value is obtained based on the instantaneous value.

2. The solid-state circuit breaker of claim 1, wherein
controlling the opening and closing of the electronic power switch module based on the instantaneous value to perform instantaneous voltage protection comprises:
comparing the instantaneous value with an instantaneous threshold, when the instantaneous value is greater than the instantaneous threshold, controlling the electronic power switch module to perform an open-then-close action;
counting, within a fixed window, a number of times the electronic power switch module performs the open-then-close action;
comparing the counted count value with an cumulative count threshold;
when the counted count value count is greater than the cumulative count threshold, causing the electronic power switch module to remain open for a first predetermined open time, and then causing electronic power switch module to close, wherein the first predetermined open time is longer than an opening duration of the electronic power switch module during the open-then-close action of the electronic power switch module; and
when the count is less than the cumulative count threshold, maintaining the electronic power switch module closed.

3. The solid-state circuit breaker of claim 2, wherein
controlling the opening and closing of the electronic power switch module based on the instantaneous value to perform transient voltage protection further comprises:
calculating, within a sliding window, an average value of the instantaneous value;
comparing the average value with an average value threshold;
when the average value of the instantaneous value is greater than the average value threshold, causing the electronic power switch module to remain open for a second predetermined open time, and then causing the electronic power switch module to close, wherein the second predetermined open time is longer than an open duration of the electronic power switch module during the open-then-close action of the electronic power switch module; and
when the average value is less than the average value threshold, maintaining the electronic power switch module closed.

4. The solid-state circuit breaker of claim 2 or claim 3, wherein
the mechanical switch module remains closed while the electronic power switch module performs the open-then-close action.

5. The solid-state circuit breaker of any one of claims 1 to 3, wherein
the instantaneous value of the input voltage is a value of the input voltage at a predetermined phase.

6. The solid-state circuit breaker of any one of claims 1 to 3, wherein
controlling the opening and closing of the electronic power switch module and the mechanical switch module based on the RMS value to perform steady-state voltage protection comprises:
comparing the RMS value with a minimum voltage threshold, when the RMS value has remained below the minimum voltage threshold for a first predetermined time threshold, determining that the input voltage is in an undervoltage condition, and controlling the electronic power switch module and the mechanical switch module such that the electronic power switch module opens first, followed by the mechanical switch module opening; and
comparing the RMS value with a maximum voltage threshold, when the RMS value has remained above the maximum voltage threshold for a second predetermined time threshold, determining that the input voltage is in an overvoltage condition, and controlling the electronic power switch module and the mechanical switch module such that the electronic power switch module opens first, followed by the mechanical switch module opening.

7. The solid-state circuit breaker of claim 6, further comprising:
a wireless communication module, communicatively connected to the controller, for performing wireless communication,
wherein the controller is further configured to:
when the mechanical switch module is opened, control the wireless communication module to send a first control message indicating that the solid-state circuit breaker is opened due to undervoltage protection, or a second control message indicating that the solid-state circuit breaker is opened due to overvoltage protection.

8. The solid-state circuit breaker of any one of claims 1 to 3, further comprising:
a ground monitoring module connected between a housing of the load and a ground, for measuring a voltage between the housing and the ground,
wherein the controller is configured to determine whether a ground fault exists in the load based on the voltage.

9. The solid-state circuit breaker of any one of claims 1 to 3, further comprising:
an auxiliary power supply module connected to the input end and configured to convert the input voltage at the input end into a direct current voltage having a predetermined voltage value to supply power to the controller and the input voltage measurement module.

10. The solid-state circuit breaker of any one of claims 1 to 3, wherein
the mechanical switch module is located closer to the input end than the electronic power switch module;
the input voltage measurement module is disposed between the input end and the mechanical switch module;
and the solid-state circuit breaker further comprises:
a first output voltage measuring module disposed between the mechanical switch module and the electronic power switch module; and
a second output voltage measuring module disposed between the electronic power switch module and the load.

11. The solid-state circuit breaker of claim 10, wherein
the controller is configured to:
obtain a first output voltage from the first output voltage measuring module and a second output voltage from the second output voltage measuring module; and
determine whether the electronic power switch module is open based on the first output voltage and the second output voltage.

12. The solid-state circuit breaker of claim 10, wherein
the controller is configured to:
determine whether the electronic power switch module is open based on the first output voltage and the second output voltage; and
control the mechanical switch module to open only when the electronic power switch module is determined to be open.
